# EUROPEAN PATENT APPLICATION

(11) **EP 0 868 962 A2**
(43) Date of publication of application: **07.10.1998**
(21) Application number: 97309999.7
(22) Date of filing: 11.12.1997
(51) Int. Cl.: B23P 19/04, H02K 33/18, H02K 41/02, B23Q 1/25

(54) **Apparatus for moving a tool**

(30) Priority: 26.02.1997 US 807004
(71) Applicant: SYSTEMS, MACHINES, AUTOMATION COMPONENTS CORPORATION, Carlsbad, California 92008 (US)
(72) Inventor: Neff, Edward A., Rancho Santa Fe, California 92067 (US); Portegies, Hans, Temecula, California 92592 (US)
(74) Representative: MacGregor, Gordon

(57) **Abstract**

An apparatus for moving a gripping tool in three mutually perpendicular directions includes a base platform, a first platform, and a second platform which are respectively located in mutually parallel planes. The first platform is slidingly mounted on the base and the second platform is slidingly mounted on the first platform, for linear reciprocal movement in a direction perpendicular to the movement of the first platform. A gripping tool is slidingly mounted on the second platform, for linear reciprocal movement perpendicular to both the movement of the first platform and the second platform. Electric voice coil actuators which include a magnet for establishing a magnetic field, and an electrical coil located in the magnetic field are employed to provide motive force for moving the first platform, the second platform, and the tool. To do this, the respective magnet and coil of each actuator are mounted on different platform levels and electric current is passed through the coil to create a magnetic field which interacts with the magnetic field produced by its cooperating magnet to move the platforms and the tool.

## Description

### FIELD OF THE INVENTION

The present invention pertains generally to machines which are useful for the automated assembly of products. More specifically, the present invention pertains to devices which are useful for positioning component parts in a product assembly process. The present invention is particularly, but not exclusively, useful as an actuator that can move a gripping tool in any direction, to enable the tool to grip and move component parts in an automated assembly process.

### BACKGROUND OF THE INVENTION

Numerous devices which are useful for the automated assembly and manufacture of products have been successfully used for many years. In each instance, automated assembly and manufacturing devices have been employed with a view towards increasing the efficiencies and accuracy's of the methods, procedures and processes which are followed during the assembly and the manufacture of a completed product Indeed, the vast majority of consumer products are now manufactured on assembly lines which incorporate automated assembly devices.

It is easy to appreciate that as the complexity of a manufactured product increases, there may also be a commensurate increase in the complexity of the machines that are required to manufacture the product. This is particularly so where the component parts have small or irregular shapes and precision machining or assembly is important. For example, many products, including printed circuit boards, require that small assembly components be accurately positioned and then inserted. The process of positioning becomes increasingly difficult as smaller assembly components are used, or where the assembly components have irregular or varying shapes.

During automated assembly, it is often necessary for the automated device to pick up a component, and then move the component and precisely place the component on the product. This process often requires accurate movement of the automated assembly device and the component, not only linearly, but in three mutually perpendicular directions (i.e. x, y and z). The ability to move in these three directions is particularly important for operations wherein parts or components need to be selectively moved from one or more supply points to one of a number of possible placement points.

Heretofore, various devices have been employed to effectuate the automated movement of components. For example, pneumatic devices have been widely used for many applications. Pneumatic devices are particularly effective where large forces are required. However, pneumatic devices are notoriously imprecise. Electric motors have also been widely used to provide motive force in automated assembly operations. However, to effectuate accurate linear movement, linear electric voice coil actuators have proven to be simpler alternatives to apparatus employing electric motors.

In light of the above, it is an object of the present invention to provide an automated assembly device capable of accurately moving a tool in three mutually perpendicular directions, and to thereby enable the tool to grip and move component parts in an automated assembly process wherein a component needs to be selectively moved from one or more supply points to a particular placement point. It is another object of the present invention to provide an automated assembly device using electric linear voice coil actuators, to effectuate accurate movement in three mutually perpendicular directions. Yet another object of the present invention is to provide an automated assembly device capable of accurate, controllable, movement in three mutually perpendicular directions, which is easy to manufacture, simple to use, and comparatively cost effective.

### SUMMARY OF THE PREFERRED EMBODIMENTS

A voice coil actuator in accordance with the present invention includes a base member, a first platform and a second platform. Specifically, the first platform is mounted on the base member for linear reciprocal movement relative to the base member in a first direction (x). Further, the second platform is mounted on the first platform for linear reciprocal movement relative to the first platform in a second direction (y). Because the first direction (x) is substantially perpendicular to the second direction (y), movements of the first and second platforms can be coordinated to move a gripping tool on the second platform in both x and y directions relative to the base member. As contemplated for the present invention the gripping tool itself can be moveable in a direction which is perpendicular to both the x and y movements of the supporting platforms. Accordingly, the tool is movable in x, y and z.

In the construction of the present invention, a linear guide rail is mounted on the base member, and the first platform is engaged with this guide rail for reciprocal movement in an x direction relative to the base member. As intended for the present invention, movement of the first platform results from electromagnetic forces. Specifically, two magnetic drivers are mounted on the base member to establish respective magnetic fields. A pair of electrical wire coils which are mounted on the first platform are positioned to interact with a respective magnetic field. Consequently, in response to current passing through the electrical wire coils, magnetic forces are generated between the coils and the magnetic drivers which move the first platform back and forth along the guide rail in the x direction.

Movement of the second platform relative to the first platform is accomplished with components similar to those disclosed above for the engaged with this guide rail for reciprocal movement relative to the first platform. Again, two magnetic drivers are used. This time, however, the magnetic drivers are mounted on the first platform, and the two electric coils are mounted on the second platform. As mounted on the second platform, the electric coils are positioned to interact with the respective magnetic fields of the magnetic drivers that are mounted on the first platform. Within this arrangement, in response to current passing through the electrical wire coils, magnetic forces are generated between the coils and the magnetic drivers which move the second platform back and forth along the guide rail in a y direction.

It is also within the intent of the present invention that the gripping tool be moved in the z direction, which is substantially perpendicular to the x and y directions, to establish an XYZ actuator. This can be accomplished by using any motive means well known in the art for moving the gripping tool in the z direction. It is to be noted that the magnetic drivers are, preferably, permanent magnets.

### BRIEF DESCRIPTION OF THE DRAWINGS

The novel features of this invention, as well as the invention itself, both as to its structure and its operation, will be best understood from the accompanying drawings, taken in conjunction with the accompanying description, in which similar reference characters refer to similar parts, and in which:
Figure 1 is a perspective view of the preferred embodiment of the device of the present invention;
Figure 2 is an exploded perspective view of the preferred embodiment of the device of the present invention, with portions removed and portions broken away for clarity;
Figure 3A is a schematic diagram depicting a typical electrical connection between an electric current source and a coil of electrically conductive wire of the present invention;
Figure 3B is a schematic diagram depicting connections between a control unit and the individual electric current sources, and the electrical connections with associated electric coils;
Figure 3C is a schematic diagram of an alternative embodiment depicting the connections between a control unit and individual electric current sources with associated electric coils in parallel;
Figure 3D is a schematic diagram of another alternative embodiment depicting the connections between a control unit and individual electric current sources, with associated electric coils in series;
Figure 4 is an exploded perspective view of an alternative embodiment of the device of the present invention, with portions removed and portions broken away for clarity; and
Figure 5 is a perspective view of an actuator of an alternative embodiment of the present invention, with portions removed and portions broken away for clarity.

### DESCRIPTION OF THE PREFERRED EMBODIMENT

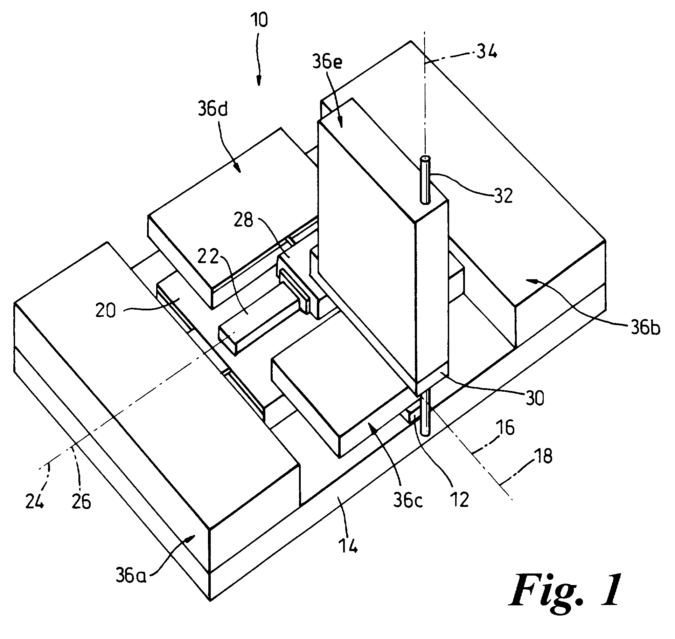

Referring initially to Figure 1, an apparatus for moving a tool in accordance with the present invention is shown and is generally designated 10. It can be seen that a first rail 12 is mounted on a base 14. The first rail 12 is linear, and the first rail 12 has a longitudinal axis 16 that defines a x-axis 18. A first platform 20 is slidingly mounted on the first rail 12, for linear reciprocal movement parallel to the x-axis 18. It can also be seen that a second rail 22 is mounted on the first platform 20. The second rail 22 is linear, and the second rail 22 has a longitudinal axis 24 that defines a y-axis 26. A second platform 28 is slidingly mounted on the second rail 22, for linear reciprocal movement parallel to the y-axis 26. The y-axis 26 is perpendicular to the x-axis 18, which results in the movement of the first platform 20 being perpendicular to the movement of the second platform 28. Also, the base 14, the first platform 20, and the second platform 28 are located in parallel planes. It can also be seen that a block 30 is mounted on the second platform 28, for movement with the second platform 28. A tool 32 is slidingly mounted on the block 30, for linear reciprocal movement parallel to a z-axis 34, which is perpendicular to the x-axis 18 and the y-axis 26.

A pair of voice coil actuators 36a-b are mounted on the base 14, to provide motive force for linear reciprocal movement of the first platform 20 parallel to the x-axis 18. Similarly, a second pair of voice coil actuators 36c-d are mounted on the first platform 20, to provide motive force for linear reciprocal movement of the second platform 28 parallel to the y-axis 26. An additional voice coil actuator 36e is mounted on the block 30, which is mounted on the second platform 28, to provide motive force for linear reciprocal movement of the tool 32 parallel to the z-axis 34. It will be appreciated by the skilled artisan that other means for moving the tool 32 along the z-axis 34, such as a pneumatic drive, an electric motor, or other means known in the art, can be utilized. The tool 32 is preferably a gripping tool, for gripping components. Alternatively, the tool 32 can be a probe or other implement known in the art. In use, the gripping tool 32 is advanced under control of the actuators 36a-e until the gripping tool 32 is positioned proximate an assembly component. The gripping tool 32 is then caused to grasp the assembly component. The gripping tool 32 and component can then be repositioned under control of the actuators 36a-e.

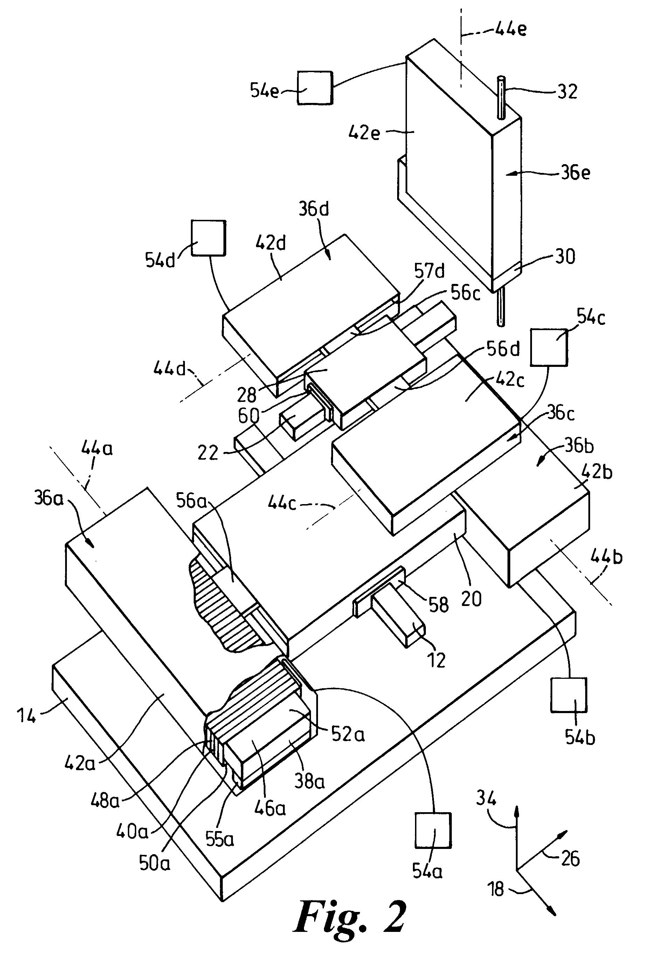

Referring to Figure 2, it can be seen that actuator 36a includes a magnet 38a, a coil 40a, and a housing 42a. Coil 40a includes a coil of electrically conductive wire 48a wrapped around, and affixed to, a bobbin 50a. Magnet 38a produces a magnetic field 46a. As is widely known in the art, the coil 40a produces a magnetic field 52a when electrically connected to an electric current source 54a. Actuator 36a is representative of the actuators 36b-e, which have respective magnets 38b-e (not shown), coils 40b-e (not shown), housings 42b-e, electrically conductive wire 48b-e (not shown), bobbins 50b-e (not shown), magnetic fields 46b-e (not shown), magnetic fields 52b-e (not shown), and electric current sources 54b-e. The magnets 38a-e are preferably permanent magnets, although it will be appreciated that electromagnets can also be used. It can be seen that each actuator 36a-e defines a respective longitudinal axis 44a-e.

Looking at actuator 36a, which is representative of the other actuators 36b-e in the preferred embodiment, it can be seen that the magnet 38a is mounted on the housing 42a, with mount 55a. Mount 55a is representative of mounts 55b-e (not shown) in respective actuators 36b-e. The coil 40a is slidingly mounted on the housing 42a, for linear reciprocal movement relative to the magnet 38a and the housing 42a, parallel to the longitudinal axis 44a of the actuator 36a. The coil 40a is positioned to encircle the magnet 38a, in the magnetic field 46a produced by the magnet 38a. The magnetic field 52a generated by the current in the coil 40a interacts with the magnetic field 46a of the magnet 38a. As is well known, this interaction creates forces on the coil 40a which cause the coil 40a to move. The magnitude and direction of the electric current applied to the coil 40a by the electric current source 54a can be varied to modulate the magnetic field 52a. This modulation of the magnetic field 52a varies the magnitude and direction of the forces on the coil 40a, and thereby controls the position and movement of the coil 40a. Thus, the coil 40a can be made to reciprocate in a controlled fashion parallel to the longitudinal axis 44a of the actuator 36a.

It can be seen that the housings 42a-b of the first pair of actuators 36a-b are mounted on the base 14, with the longitudinal axes 44a-b of the actuators 36a-b aligned parallel with the x-axis 18. An arm 56a connects the coil 40a with the first platform 20. Arm 56a is representative of an arm 56b (not shown) that connects the coil 40b with the first platform 20. The electric current sources 54a-b that are connected to coils 40a-b are substantially equivalent and synchronized, such that the coils 40a-b move in concert in the same direction at the same time, parallel to the x-axis 18. Thus, when coils 40a-b move, they cause the first platform 20 to move parallel to the x-axis 18, in concert with the movement of the coils 40a-b. The first platform 20 is also connected to a first slide unit 58. The first slide unit 58 is slidingly mounted on the first rail 12, to enable the first slide unit 58 to slide on the first rail 12. Thus, when the first platform 20 is moved by coils 40a-b, the first platform 20 moves with the first slide unit 58 on the first rail 12.

Similarly, the housings 42c-d of the second pair of actuators 36c-d are mounted on the first platform 20, with the longitudinal axes 44c-d of the actuators 36c-d aligned parallel with the y-axis 26. An arm 56c connects the coil 40c with the second platform 28, and similarly, an arm 56d connects the coil 40d with the second platform 28. It can be seen that arm 56d projects through a slot 57d in housing 42d. Slot 57d is representative of slots 57a-c (not shown) in housings 42a-c. The electric current sources 54c-d that are connected to coils 40c-d are substantially equivalent and synchronized, such that the coils 40c-d move in concert in the same direction at the same time, parallel to the y-axis 26. Thus, when coils 40c-d move, they cause the second platform 28 to move parallel to the y-axis 26, in concert with the movement of the coils 40c-d. The second platform 28 is also connected to a second slide unit 60. The second slide unit 60 is slidingly mounted on the second rail 22, to enable the second slide unit 60 to slide on the second rail 22. Thus, when the second platform 28 is moved by coils 40c-d, the second platform 28 moves with the second slide unit 60 on the second rail 22.

The housing 42e of actuator 36e is mounted to the block 30, which is mounted on the second platform 28, with the longitudinal axis 44e of the actuator aligned parallel with the z-axis 34. The tool 32 is mounted on the coil 40e, for linear reciprocal movement with the coil 40e, parallel to the z-axis 34.

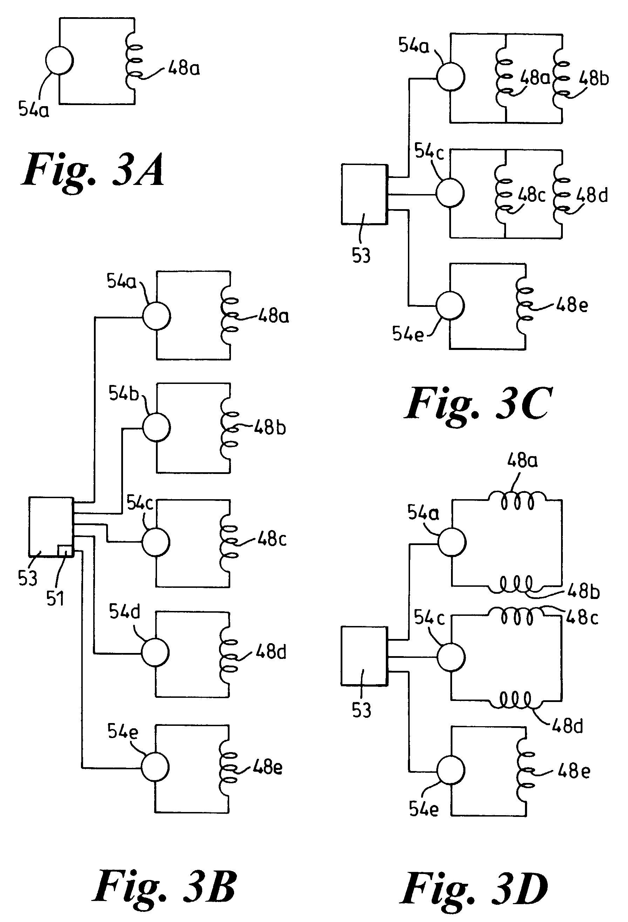

Referring to Figure 3A, a schematic diagram is shown depicting the electrical connections between the electrical current source 54a and the coil of electrically conductive wire 48a. The electrical connections between the electrical current source 54a and the coil of electrically conductive wire 48a are representative of the electrical connections between electrical current sources 54b-e and respective coils of electrically conductive wire 48b-e.

As shown in Figure 3B, it is intended that electric current sources 54a-e be selectively controlled by a control unit 53, to coordinate the operations of the current sources 54a-e. For this purpose a control unit 53 can be employed as shown. Specifically, it is intended that control unit 53 have the capability to control the magnitude, polarity, and timing of the respective electric currents that are supplied by each of the electric current sources 54a-e to their respective coils 48a-e. For the present invention, the control unit 53 can be a mechanical, or preferably an electronic device for controlling current sources 54a-e. In either case, it is preferred that the control unit 53 include programmable computer circuitry, or that the control unit 53 be connectable to an external computer controller (not shown) so that operation of the respective coils 48a-e with their respective magnets 38a-e can be coordinated. Additionally, the control unit 53 can include time delay circuitry 51 for delaying the activation of current source 54e, which controls movement of the tool 32 along the z-axis 34. Thus, it will be appreciated by the skilled artisan that by employing the control unit 53, it is possible to supply differing electric currents to actuators 36a and 36b, and also to actuators 36c and 36d. This allows implementation of more complex control over the platforms 20, 28.

Figure 3C shows an alternative embodiment, in which coils of electrically conductive wire 48a and 48b can be wired in parallel with the single electric current source 54a. Similarly, Figure 3C shows that coils of electrically conductive wire 48c and 48d can be wired in parallel with the single electric current source 54c.

Figure 3D shows yet another alternative embodiment, in which coils of electrically conductive wire 48a and 48b can be wired in series with the single electric current source 54a. Figure 3D also shows that coils of electrically conductive wire 48c and 48d can be wired in series with the single electric current source 54c.

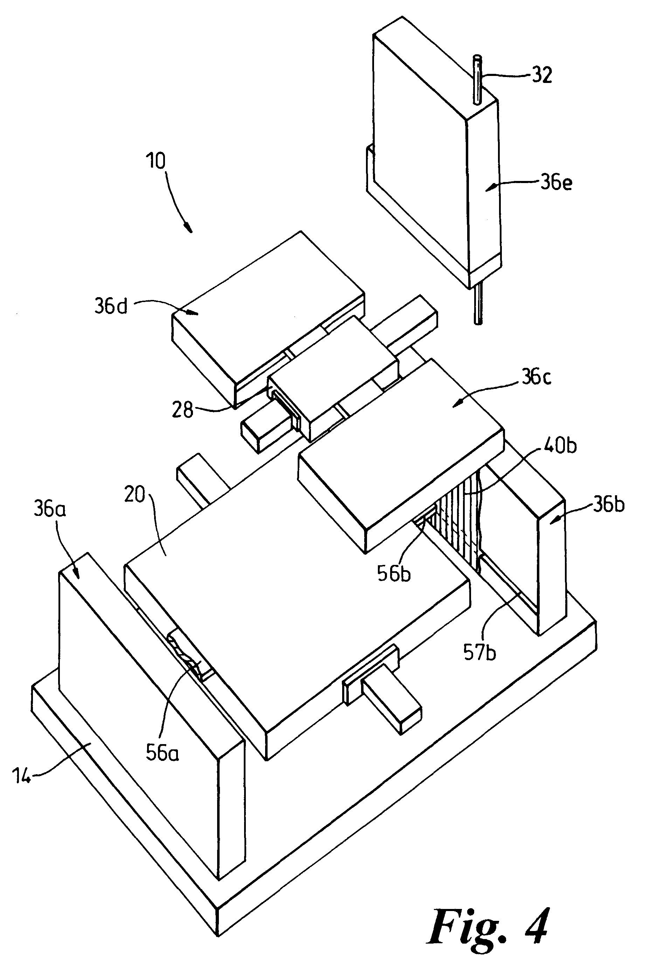

Referring to Figure 4, an alternative embodiment is depicted. This embodiment is identical to the embodiment shown in Figure 2, except that the actuators 36a and 36b have each been rotated ninety degrees (90 degrees), and, the slots 57a-b, and the connections between the arms 56a-b and the respective coils 40a-b, have been correspondingly relocated. Slot 57b, which is representative of slot 57a, can be seen relocated in Figure 4. Likewise, the relocated connection between arm 56b and coil 40b can be seen in Figure 4, which is representative of the connection between arm 56a and coil 40a. As can be seen, this alternative embodiment results in a more compact apparatus, due to the reorientation of the actuators 36a-b.

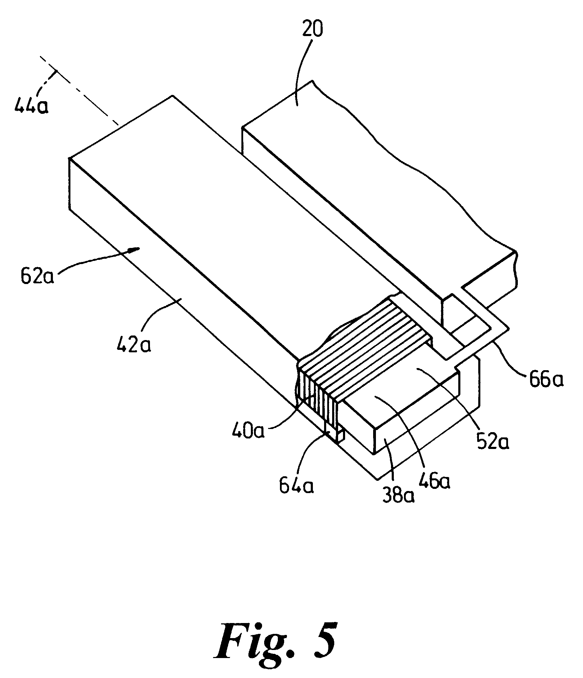

Referring to Figure 5, another alternative embodiment is depicted. Actuator 62a is shown, which is representative of actuators 62b-e (not shown). In this alternative embodiment, actuators 62a-e are located in respective positions corresponding with actuators 36a-e in the embodiment shown in Figure 2. In this alternative embodiment, the coils 40a-e are fixedly mounted to the respective housings 42a-e and it is the magnets 38a-e that are slidingly mounted on the housings 42a-e, and that are caused to move as a result of the respective magnetic fields 46a-e, 52a-e. It can be seen that the coil 40a is mounted on the housing 42a, with mount 64a. The magnet 38a is slidingly mounted on the housing 42a, for linear reciprocal movement relative to the coil 40a and the housing 42a, parallel to the longitudinal axis 44a of the actuator 62a. The coil 40a is positioned to encircle the magnet 38a, in the magnetic field 46a produced by the magnet 38a. The magnetic field 52a generated by the current in the coil 40a interacts with the magnetic field 46a of the magnet 38a. As is well known, this interaction creates forces on the magnet 38a which cause the magnet 38a to move. The magnitude and direction of the electric current applied to the coil 40a by the electric current source 54a can be varied to modulate the magnetic field 52a. This modulation of the magnetic field 52a varies the magnitude and direction of the forces on the magnet 38a, and thereby controls the position and movement of the magnet 38a. Thus, the magnet 38a can be made to reciprocate in a controlled fashion parallel to the longitudinal axis 44a of the actuator 62a.

In the alternative embodiment depicted in Figure 5, an arm 66a connects the magnet 38a with the first platform 20, to cause the first platform 20 to correspondingly move when the magnet 38a moves. Similarly, an arm 66b connects the magnet 38b with the first platform 20, and arms 66c-d respectively connect the magnets 38c-d with the second platform 28 (all not shown). As in the embodiment shown in Figure 2, the electric current sources 54a-b that are connected to coils 40a-b are substantially equivalent and synchronized, such that the magnets 38a-b move in concert in the same direction at the same time, parallel to the x-axis 18. Thus, when magnets 38a-b move, they cause the first platform 20 to move parallel to the x-axis 18, in concert with the movement of the magnets 38a-b. As in the embodiment shown in Figure 2, the first platform 20 is also connected to a first slide unit 58. The first slide unit 58 is slidingly mounted on the first rail 12, to enable the first slide unit 58 to slide on the first rail 12. Thus, when the first platform 20 is moved by magnets 38a-b, the first platform 20 moves with the first slide unit 58 on the first rail 12.

Similarly, in this alternative embodiment depicted in Figure 5, the housings 42c-d of the second pair of actuators 62c-d are mounted on the second platform 28, with the longitudinal axes 44c-d of the actuators 62c-d aligned parallel with the y-axis 26, as in the embodiment shown in Figure 2. The electric current sources 54c-d that are connected to coils 40c-d are substantially equivalent and synchronized, such that the magnets 38c-d move in concert in the same direction at the same time, parallel to the y-axis 26. Thus, when magnets 38c-d move, they cause the second platform 28 to move parallel to the y-axis 26, in concert with the movement of the magnets 38c-d. As in the embodiment shown in Figure 2, the second platform 28 is also connected to a second slide unit 60. The second slide unit 60 is slidingly mounted on the second rail 22, to enable the second slide unit 60 to slide on the second rail 22. Thus, when the second platform 28 is moved by magnets 38c-d, the second platform 28 moves with the second slide unit 60 on the second rail 22.

In this alternative embodiment, the housing 42e of actuator 62e is mounted on the block 30, which is mounted on the second platform 28, with the longitudinal axis 44e of the actuator 62e aligned parallel with the z-axis 34, as in the embodiment shown in Figure 2. In this alternative embodiment, the tool 32 is mounted on the magnet 38e, for linear reciprocal movement with the magnet 38e, parallel to the z-axis 34.

While the particular apparatus for moving a tool as herein shown and disclosed in detail is fully capable of obtaining the objects and providing the advantages herein before stated, it is to be understood that it is merely illustrative of the presently preferred embodiments of the invention and that no limitations are intended to the details of construction or design herein shown other than as described in the appended claims.

## Claims

1. An apparatus for moving a tool which comprises:
a base;
a first platform slidingly mounted on said base;
a first magnetic means interconnecting said first platform with said base for moving said first platform in an x direction relative to said base;
a second platform slidingly mounted on said first platform;
a second magnetic means interconnecting said second platform with said first platform for moving said second platform in a y direction relative to said first platform; and
wherein said tool is mounted on said second platform for movement therewith.

2. An apparatus as recited in claim 1 wherein said y-direction is substantially perpendicular to said x-direction.

3. An apparatus as recited in claim 1 further comprising a third magnetic means mounted on said second platform for moving said tool in a z-direction, said tool being mounted on said third magnetic means, said z-direction being substantially perpendicular to said y-direction and said x-direction.

4. An apparatus as recited in claim 1 wherein the tool comprises means for gripping a workpiece.

5. An apparatus as recited in claim 1 wherein said first platform moves in a first plane and said second platform moves in a second plane, said first plane being substantially parallel to said second plane.

6. An apparatus for moving a tool which comprises:
a base;
a first magnetic means mounted on said base, said first magnetic means having a first magnetic field;
a first platform slidingly mounted on said base for movement in an x-direction, said first platform having a second magnetic means, said second magnetic means having a second magnetic field positioned for interaction with said first magnetic field, said first platform having a third magnetic means, said third magnetic means having a third magnetic field;
a second platform slidingly mounted on said first platform for movement in a y-direction, the tool being mounted on said second platform for movement therewith, said second platform having a fourth magnetic means, said fourth magnetic means having a fourth magnetic field positioned for interaction with said third magnetic field;
a first modulating means connected to said second magnetic means for modulating said second magnetic field, for moving said first platform; and
a second modulating means connected to said fourth magnetic means for modulating said fourth magnetic field, for moving said second platform.

7. An apparatus as recited in claim 6 wherein said x-direction is substantially perpendicular to said y-direction.

8. An apparatus as recited in claim 7 further comprising means for moving the tool in a z-direction, said z-direction being substantially perpendicular to said x-direction and substantially perpendicular to said y-direction.

9. An apparatus as recited in claim 8 wherein said means for moving the tool in a z-direction comprises:
a fifth magnetic means mounted on said second platform, said fifth magnetic means having a fifth magnetic field;
a sixth magnetic means having a sixth magnetic field positioned to interact with said fifth magnetic field, said sixth magnetic means being slidingly mounted on said second platform for movement in said z-direction, the tool being mounted on said sixth magnetic means; and
a third modulating means connected to said sixth magnetic means for modulating said sixth magnetic field, for moving said sixth magnetic means and said tool.

10. An apparatus as recited in claim 9 wherein said first, third, and fifth magnetic means are respectively first, second, and third permanent magnets.

11. An apparatus as recited in claim 9 wherein said second, fourth, and sixth magnetic means are respectively, first, second, and third coils of electrically conductive wire, and wherein said first, second, and third modulating means are respectively, first, second, and third electric current sources.

12. An apparatus as recited in claim 11 further comprising:
a fourth magnet mounted on said base, said fourth magnet having a seventh magnetic field;
a fourth coil of electrically conductive wire mounted on said first platform, said fourth coil having an eighth magnetic field positioned for interaction with said seventh magnetic field;
a fifth magnet mounted on said first platform, said fifth magnet having a ninth magnetic field;
a fifth coil of electrically conductive wire mounted on said second platform, said fifth coil having a tenth magnetic field positioned for interaction with said ninth magnetic field;
a fourth electric current source electrically connected to said fourth coil for establishing and modulating said eighth magnetic field, for moving said first platform; and
a fifth electric current source electrically connected to said fifth coil for establishing and modulating said tenth magnetic field, for moving said second platform.

13. An apparatus as recited in claim 6 wherein the tool comprises means for gripping a workpiece.

14. An apparatus for moving a tool which comprises:
a base;
a first magnetic means mounted on said base, said first magnetic means having a first magnetic field;
a first platform slidingly mounted on said base for movement in an x-direction, said first platform having a second magnetic means, said second magnetic means having a second magnetic field positioned for interaction with said first magnetic field, said first platform having a third magnetic means, said third magnetic means having a third magnetic field;
a second platform slidingly mounted on said first platform for movement in a y-direction, the tool being mounted on said second platform for movement therewith, said second platform having a fourth magnetic means, said fourth magnetic means having a fourth magnetic field positioned for interaction with said third magnetic field;
a first modulating means connected to said first magnetic means for modulating said first magnetic field, for moving said first platform; and
a second modulating means connected to said third magnetic means for modulating said third magnetic field, for moving said second platform.

15. An apparatus as recited in claim 14 wherein said x-direction is substantially perpendicular to said y-direction, and further comprising means for moving the tool in a z-direction, said z-direction being substantially perpendicular to said x-direction and substantially perpendicular to said y-direction.

16. An apparatus as recited in claim 15 wherein said means for moving the tool in a z-direction comprises:
a fifth magnetic means mounted on said second platform, said fifth magnetic means having a fifth magnetic field;
a sixth magnetic means having a sixth magnetic field positioned to interact with said fifth magnetic field, said sixth magnetic means being slidingly mounted on said second platform for movement in said z-direction, the tool being mounted on said sixth magnetic means; and
a third modulating means connected to said fifth magnetic means for modulating said fifth magnetic field, for moving said fifth magnetic means and said tool.

17. An apparatus as recited in claim 16 wherein said second, fourth, and sixth magnetic means are respectively, first, second, and third permanent magnets.

18. An apparatus as recited in claim 16 wherein said first, third, and fifth magnetic means are respectively, first, second, and third coils of electrically conductive wire, and wherein said first, second, and third modulating means are respectively first, second, and third electric current sources.

19. An apparatus as recited in claim 16 further comprising:
a fourth magnet mounted on said first platform, said fourth magnet having a seventh magnetic field;
a fourth coil of electrically conductive wire mounted on said base, said fourth coil having an eighth magnetic field positioned for interaction with said seventh magnetic field;
a fifth magnet mounted on said second platform, said fifth magnet having a ninth magnetic field;
a fifth coil of electrically conductive wire mounted on said first platform, said fifth coil having a tenth magnetic field positioned for interaction with said ninth magnetic field;
a fourth electric current source electrically connected to said fourth coil for establishing and modulating said eighth magnetic field, for moving said first platform; and
a fifth electric current source electrically connected to said fifth coil for establishing and modulating said tenth magnetic field, for moving said second platform.

20. An apparatus as recited in claim 14 wherein the tool comprises means for gripping a workpiece.
